# EUROPEAN PATENT SPECIFICATION

(11) **EP 4 471 960 B1**
(45) Date of publication and mention of the grant of the patent: **21.10.2026**
(21) Application number: 23894722.0
(22) Date of filing: 14.08.2023
(51) Int. Cl.: H01M 50/325, H01M 50/383, H01M 50/358, H01M 50/211, H01M 50/249, H01M 50/209, H01M 50/342, H01M 50/207, H01M 50/273, H01M 50/278, H01M 50/291, H01M 50/293

(54) **BATTERY MODULE, AND BATTERY PACK AND VEHICLE INCLUDING SAME**
BATTERIEMODUL SOWIE BATTERIEPACK UND FAHRZEUG DAMIT
MODULE DE BATTERIE, BLOC-BATTERIE ET VÉHICULE LE COMPRENANT

(30) Priority: 21.11.2022 KR 20220156386
(43) Date of publication of application: 04.12.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2023/012048
(87) International publication number: WO 2024/111789

(56) References cited:
- EP-A1- 4 391 189
- CN-A- 114 497 873
- CN-A- 114 497 873
- CN-A- 114 678 639
- CN-U- 216 597 867
- KR-A- 20220 142 279
- KR-B1- 102 284 454

## Description

### TECHNICAL FIELD

The present disclosure relates to a battery module, and a battery pack and a vehicle including the same, and more specifically, it relates to a battery module having a plurality of battery cells capable of being charged and discharged, and a battery pack and a vehicle including the battery module.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series, parallel, or a combination thereof and reconnecting these battery modules in series, parallel, or a combination thereof, has been widely used.

However, as disclosed in Korean Unexamined Patent Publication No. 10-2022-0052183, since existing battery modules are manufactured by storing multiple battery cells densely stacked inside a metal case in a sealed structure, if venting gas is generated from any one battery cell inside the battery module, it is difficult to discharge the venting gas to the outside of the battery module, and heat energy is accumulated inside the battery module, causing chain thermal runaway or ignition of other battery cells within a short period of time.

In addition, the existing battery modules are unable to discharge high-temperature and high-pressure venting gas in an intended direction, causing damage to other battery modules adjacent to the battery module in which thermal runaway occurred or chain thermal runaway thereof.

Documents CN 114497873 A and EP 4391189 A1 disclose battery modules having a module case defining venting holes and a top cover placed over the venting holes and configured to open under pressure from venting gas from the battery cells.

### DISCLOSURE

### Technical Problem

The present disclosure has been designed to solve the problems of the related art, and therefore the present disclosure is directed to providing a battery module capable of quickly discharging venting gas from a battery cell accommodated inside the battery module to the outside of the battery module, thereby delaying the heat propagation time, and a battery pack and a vehicle including this battery module.

The present disclosure is also directed to providing a battery module that controls the discharge of the venting gas in an intended direction, thereby preventing damage to other battery cells accommodated in the battery module and other battery modules adjacent to the battery module, and chain thermal runaway or ignition thereof, and a battery pack and a vehicle including the battery module.

### Technical Solution

To this end, the invention provides a battery module according to claim 1.

The battery module according to the invention may present one or more feature(s) of dependent claims 2 to 10, in any combination allowed by the claims.

The invention also relates to a battery pack according to claim 11 and a vehicle according to claim 12.

### Advantageous Effects

According to the present disclosure, since a module case of a battery module accommodating battery cells has a vent hole for discharging venting gas of the battery cells, and since a vent hole cover attached to the module case to cover the vent hole includes an opening portion configured to be opened by the venting gas, it is possible to prevent foreign substances from entering the battery module and quickly discharge venting gas generated from the battery cells to the outside of the battery module. As a result, the heat propagation time can be delayed by minimizing the heat energy accumulated inside the battery module, and chain thermal runaway or ignition of other battery cells accommodated in the battery module can be prevented.

In addition, the vent holes of the battery module are provided only on a specific surface among a plurality of surfaces of the module case, thereby discharging high-temperature and high-pressure venting gas generated from the battery cells in an intended direction, and as a result, it is possible to prevent damage to other battery modules adjacent to the battery module or chain thermal runaway thereof.

In addition, the vent hole cover is configured in the form of a flexible sheet and attached to the module case while covering least two of a plurality of surfaces of the module case, thereby reducing the weight of the battery module, simplifying the manufacturing process, and preventing the vent hole cover from being separated from the module case by the pressure of the venting gas.

In addition, the opening portion of the vent hole cover includes, in addition to a main support portion supporting a lid portion, a plurality of sub-support portions that are provided at positions spaced apart from the main support portion to support the lid portion and are configured to break if the pressure of the venting gas exceeds a predetermined threshold pressure, thereby adjusting the open area of the vent hole depending on the pressure of the venting gas.

In addition, since a blocking beam is provided inside the vent hole, it is possible to prevent the lid portion of the opening portion, which opens and closes the opening of the corresponding vent hole, from being broken by external pressure and being pushed into the interior of the corresponding vent hole.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery module according to an embodiment of the present disclosure.
FIG. 2 is an exploded perspective view illustrating the battery module shown in FIG. 1.
FIG. 3 is a plan view illustrating the shape of a vent hole cover before being attached to a module case.
FIG. 4 is an enlarged view illustrating area A1 in FIG. 1.
FIG. 5 is a cross-sectional view of the vent hole cover taken along a line S1-S1' in FIG. 4.
FIG. 6 is a diagram illustrating an opening operation of the vent hole cover shown in FIG. 5.
FIG. 7 is a diagram illustrating an opening portion of a vent hole cover according to a modified embodiment of the present disclosure.
FIG. 8 is a cross-sectional view of the vent hole cover taken along a line S2-S2' in FIG. 7.
FIGS. 9 and 10 are diagrams illustrating an opening operation of the vent hole cover shown in FIG. 8 according to the venting gas pressure.
FIG. 11 is a perspective view illustrating a main frame of a module case according to a modified embodiment of the present disclosure.
FIG. 12 is a perspective view illustrating a vent hole cover according to another modified embodiment of the present disclosure.
FIG. 13 is a diagram illustrating an opening operation of a cross-sectional portion taken along a line S3-S3' in FIG. 12.
FIG. 14 is a diagram illustrating a main frame of a module case and a vent hole cover according to another modified embodiment of the present disclosure.
FIG. 15 is a diagram illustrating a battery pack according to an embodiment of the present disclosure.
FIG. 16 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

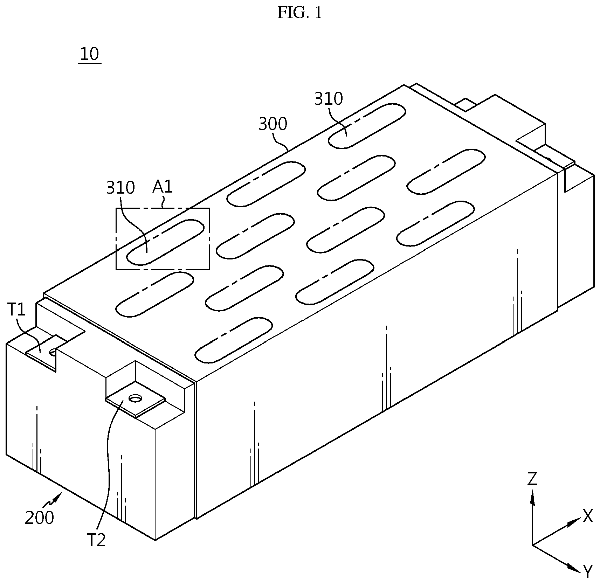

FIG. 1 is a perspective view illustrating a battery module 10 according to an embodiment of the present disclosure.

As shown in FIG. 1, the battery module 10 according to an embodiment of the present disclosure includes a module case 200 and a vent hole cover 300.

The module case 200 may be configured to have an inner space surrounded by a plurality of surfaces and accommodate battery cells in the inner space. Additionally, the module case 200 may have at least one vent hole which leads to the inner space and is provided on a first surface among the plurality of surfaces. Terminals T1 and T2 that are electrically connected to the battery cells accommodated in the inner space may be disposed on the outer surface of the module case 200.

The vent hole cover 300 may be attached to the outer surface of the module case 200 and may be configured to cover at least one vent hole provided in the module case 200. In particular, the vent hole cover 300 may have an opening portion 310 that is provided in a portion of the vent hole cover 300 corresponding to the at least one vent hole and configured to be opened by venting gas from the battery cells.

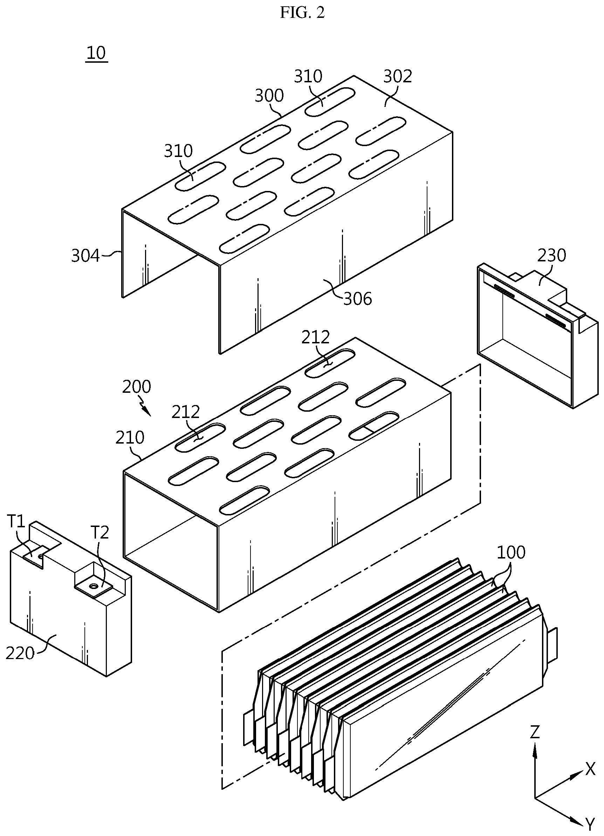

FIG. 2 is an exploded perspective view illustrating the battery module 10 shown in FIG. 1.

As shown in FIG. 2, the module case 200 of the battery module 10 may include a main frame 210, a first end frame 220, and a second end frame 230.

The main frame 210 may be configured to have an inner space surrounded by a plurality of surfaces and accommodate at least one battery cell 100 in the inner space. For example, the main frame 210 may be configured in the form of a tube that has an upper surface, a lower surface, a left surface, and a right surface and has openings formed at the front and rear ends, respectively. In this case, the main frame 210 may be made of a metal material with rigidity and heat resistance.

At least one vent hole 212 leading to the inner space of the main frame 210 may be provided on the upper surface among the plurality of surfaces constituting the main frame 210 of the module case 200.

Meanwhile, the battery cell 100 accommodated in the module case 200 corresponds to a basic secondary battery capable of being charged and discharged. This battery cell 100 may be a pouch-type battery cell equipped with electrode leads at both ends thereof in the longitudinal direction (X-axis direction). In this case, the battery cells accommodated in the module case 200 may be accommodated in the module case 200 in the state of being stacked on each other in one direction (Y-axis direction). Depending on the embodiment, the battery cell 100 accommodated in the module case 200 may also be configured as a prismatic or cylindrical battery cell.

The first end frame 220 may be coupled to the front end of the main frame 210 and configured to airtightly cover the front opening of the main frame 210. In addition, terminals T1 and T2 to be electrically connected to the battery cells accommodated in the inner space of the main frame 210 may be disposed on the outer surface of the first end frame 220. The first end frame 220 may be made of metal, synthetic resin, or a combination of metal and synthetic resin with rigidity and heat resistance.

The second end frame 230 may be coupled to the rear end of the main frame 210 and configured to airtightly cover the rear opening of the main frame 210. This second end frame 230 may be made of metal, synthetic resin, or a combination of metal and synthetic resin with rigidity and heat resistance.

The vent hole cover 300 may be attached to the main frame 210 of the module case 200 and configured to cover the vent hole 212 provided on the upper surface of the main frame 210. In particular, the vent hole cover 300 may have an opening portion 310 provided in each portion of the vent hole cover 300 corresponding to the vent hole 212 of the main frame 210. This opening portion 310 may be configured to be opened by venting gas from the battery cells accommodated in the module case 200.

In addition, the vent hole cover 300 may be configured in the form of a sheet and may be attached to the module case 200 so as to cover at least two of the plurality of surfaces of the module case 200. To this end, the vent hole cover 300 may include a cover portion 302 having the opening portion 310 and covering the upper surface of the module case 200, a first attachment portion 304 extending from one end of the cover portion 302 and attached to one surface of the module case 200 adjacent to the upper surface, and a second attachment portion 306 extending from the other end of the cover portion 302 and attached to the other surface of the module case 200 adjacent to the upper surface.

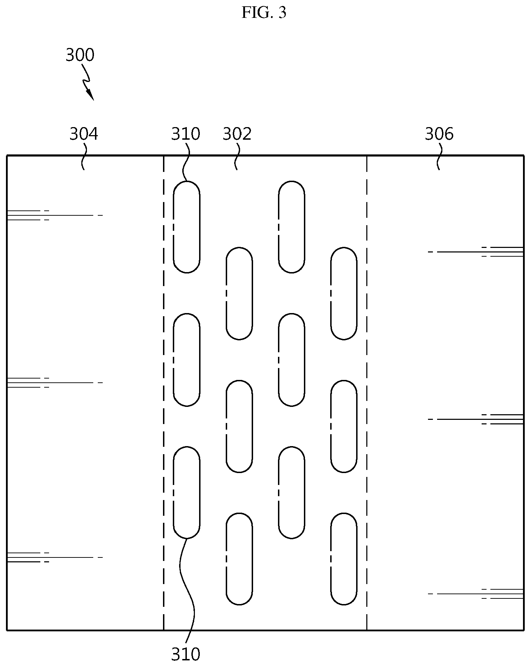

FIG. 3 is a plan view illustrating the shape of a vent hole cover 300 before being attached to a module case 200.

As shown in FIG. 3, the vent hole cover 300 may be configured in the form of a sheet and may be attached to the module case 200 so as to cover at least two of a plurality of surfaces of the module case 200.

To this end, the vent hole cover 300 may be made of a flexible material. The flexible material constituting the vent hole cover 300 may include one or more of polyimide, aromatic polyamide, and fluoropolymer, which have flexibility and high heat resistance.

In addition, the vent hole cover 300 may have attachment surfaces attached to the outer surfaces of the module case 200. In this case, an adhesive layer may be provided on the attachment surface of the vent hole cover 300. The vent hole cover 300 may be attached to the plurality of surfaces of the module case 200, as well as the upper surface thereof, using the attachment surfaces.

As mentioned above, the vent hole cover 300 may include a cover portion 302 having the opening portion 310 and covering a first surface of the module case 200, a first attachment portion 304 extending from one end of the cover portion 302 and attached to a second surface of the module case 200 adjacent to the first surface, and a second attachment portion 306 extending from the other end of the cover portion 302 and attached to a third surface of the module case 200 adjacent to the first surface. In this case, in addition to the first attachment portion 304 and the second attachment portion 306 of the vent hole cover 300, the cover portion 302 may have an attachment surface provided with an adhesive layer.

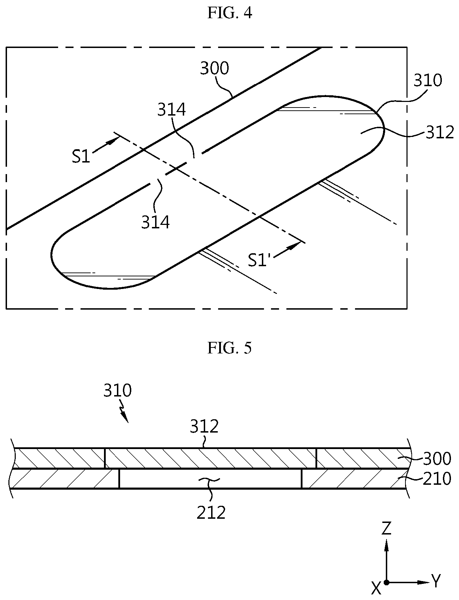

FIG. 4 is an enlarged view illustrating area A1 in FIG. 1.

As shown in FIG. 4, the opening portion 310 of the vent hole cover 300 may include a lid portion 312 and at least one support portion 314.

The lid portion 312 corresponds to a lid that opens and closes the opening of a corresponding vent hole. The lid portion 312 may be configured to be in close contact with the module case 200 to close the opening of a corresponding vent hole in the normal case where venting gas is not generated from the battery cell, but to be spaced apart from the module case 200 in the case where venting gas is generated from the battery cell, thereby opening the opening of the corresponding vent hole.

The at least one support portion 314 may have one end that is integrally connected with a portion of the vent hole cover 300, excluding the lid portion 312, (e.g., the main body portion of the vent hole cover 300 attached to the module case 200) and the other end that is integrally connected with the lid portion 312 to support the lid portion 312 spaced apart from the module case 200 by the pressure of the venting gas.

The opening portion 310 of the vent hole cover 300 may be configured by forming a notch or incision line corresponding to the shape of the opening portion 310 on one surface of a sheet for the vent hole cover.

FIG. 5 is a cross-sectional view of the vent hole cover 300 taken along a line S1-S1' in FIG. 4.

As shown in FIG. 5, in the normal case where venting gas is not generated from the battery cell inside the module case 200, the opening portion 310 of the vent hole cover 300 may cover and close the opening of a corresponding vent hole 212 provided on the main frame 210 of the module case 200.

To this end, the lid portion 312 of the opening portion 310 may have an area equal to or greater than that of the opening of the vent hole 212.

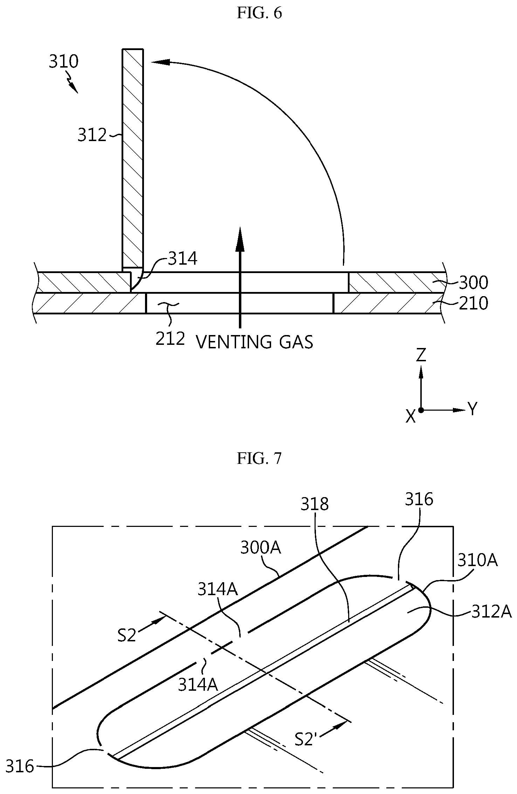

FIG. 6 is a diagram illustrating an opening operation of the vent hole cover 300 shown in FIG. 5.

As shown in FIG. 6, if venting gas is generated from the battery cell inside the module case 200, the opening portion 310 of the vent hole cover 300 may be broken and opened by the pressure of the venting gas.

For example, if venting gas is generated from the battery cell inside the module case 200, the lid portion 312 of the opening portion 310 may be spaced apart from the main frame 210 of the module case 200 by the pressure of the venting gas, so that the opening of the vent hole 212 may be opened. In this case, the support portion 314 of the opening portion 310 may support the lid portion 312 spaced apart from the module case 200, so that the lid portion 312 may rotate around the support portion 314 to open the opening of the vent hole 212.

For reference, if the lid portion 312 is completely separated from the vent hole cover 300 by the pressure of the venting gas, the fragments of the separated lid portion may cause various problems inside the battery pack. To prevent this problem, the support portion 314 may support the lid portion 312 such that the lid portion 312 is not completely separated from the vent hole cover 300.

As described above, since the vent hole cover 300 attached to the module case 200 and covering the vent hole 212 of the module case 200 includes the opening portion 310 configured to be opened by the venting gas from the battery cells accommodated inside the module case 200, it is possible to prevent foreign substances from entering the battery module and quickly discharge venting gas generated from the battery cells to the outside of the battery module. As a result, the heat propagation time can be delayed by minimizing the heat energy accumulated inside the battery module, and chain thermal runaway or ignition of other battery cells accommodated in the battery module can be prevented.

In addition, the vent hole cover 300 is configured in the form of a flexible sheet and attached to the module case 200 while covering least two of a plurality of surfaces of the module case 200, thereby reducing the weight of the battery module, simplifying the manufacturing process, and preventing the vent hole cover 300 from being separated from the module case 200 by the pressure of the venting gas.

In addition, the vent holes of the battery module are provided only on a specific surface among a plurality of surfaces of the module case 200, thereby discharging high-temperature and high-pressure venting gas generated from the battery cells in an intended direction, and as a result, it is possible to prevent damage to other battery modules adjacent to the battery module or chain thermal runaway thereof.

FIG. 7 is a diagram illustrating an opening portion 310A of a vent hole cover 300A according to a modified embodiment of the present disclosure.

As shown in FIG. 7, the opening portion 310A of the vent hole cover 300A may include a lid portion 312A and a plurality of support portions 314A and 316.

The lid portion 312A may be configured to be in close contact with the module case 200 to close the opening of a corresponding vent hole in the normal case where venting gas is not generated from the battery cell, but to be spaced apart from the module case 200 in the case where venting gas is generated from the battery cell, thereby opening the opening of the corresponding vent hole.

Each of the plurality of support portions 314A and 316 may have one end that is integrally connected with a portion of the vent hole cover 300A, excluding the lid portion 312A, and the other end that is integrally connected with the lid portion 312A to support the lid portion 312A spaced apart from the module case 200 by the pressure of the venting gas.

In particular, the plurality of support portions 314A and 316 may include a main support portion 314A and a plurality of sub-support portions 316.

In this case, the main support portion 314A may be configured to support the lid portion 312A spaced apart from the module case 200 by the venting gas pressure. In addition, the plurality of sub-support portions 316 may be provided at positions spaced apart from the main support portion 314A to support the lid portion 312A spaced apart from the module case 200 and may be configured to break if the pressure of the venting gas exceeds a predetermined threshold pressure. To this end, each of the plurality of sub-support portions 316 may have the same length and thickness as the main support portion 314A, but may have a smaller width than the main support portion 314A.

For example, if the pressure of the venting gas generated from the battery cell inside the module case 200 exceeds a first threshold pressure, the tip portion of the lid portion 312A may be separated from the main body of the vent hole cover 300A and spaced apart from the module case, so the vent hole 212 of the module case 200 may be partially opened. In this case, a plurality of sub-support portions 316 may support the tip portion of the lid portion 312A.

In an embodiment, a fold line 318 may be provided between the tip portion and the remaining portion of the lid portion 312A to facilitate opening of the tip portion. The fold line 318 may be configured to be thinner than other portions of the lid portion 312A.

Meanwhile, if the pressure of the venting gas exceeds a second threshold pressure that is greater than the first threshold pressure, the plurality of sub-support portions 316 supporting the tip portion of the lid portion 312A may be broken so that the remaining portion of the lid portion 312A may also be separated from the main body of the vent hole cover 300A and spaced apart from the module case 200, thereby completely opening the vent hole 212 of the module case 200. In this case, the main support portion 314A may support the entire lid portion 312A.

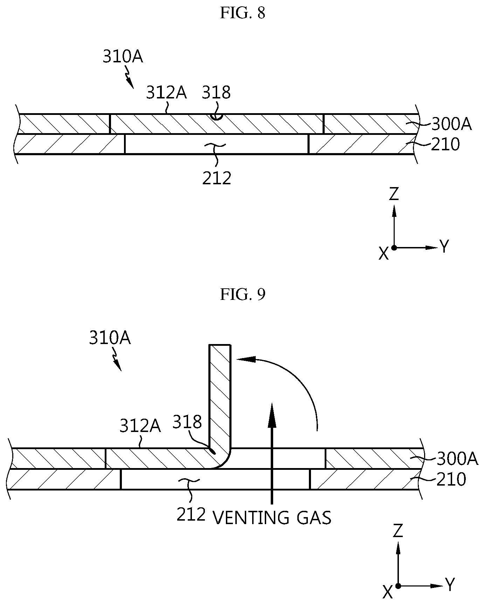

FIG. 8 is a cross-sectional view of the vent hole cover 300A taken along a line S2-S2' in FIG. 7.

As shown in FIG. 8, in the normal case where venting gas is not generated from the battery cell inside the module case 200, the opening portion 310A of the vent hole cover 300A may cover and close the opening of a corresponding vent hole 212 provided on the main frame 210 of the module case 200.

To this end, the lid portion 312A of the opening portion 310A may have an area equal to or greater than that of the opening of the vent hole 212. In addition, a fold line 318 may be provided on one surface of the lid portion 312A to facilitate folding of the lid portion 312A.

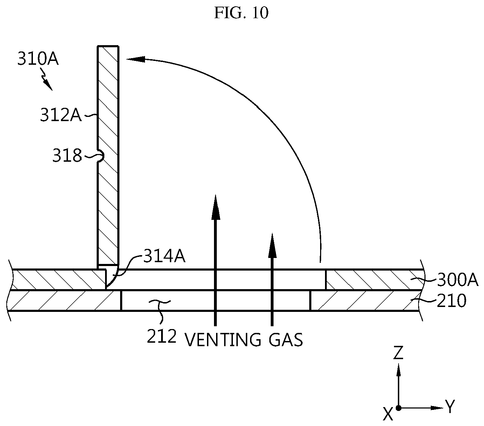

FIGS. 9 and 10 are diagrams illustrating an opening operation of the vent hole cover 300A shown in FIG. 8 according to the venting gas pressure.

First, as shown in FIG. 9, if the pressure of venting gas generated from the battery cell inside the module case 200 exceeds a first threshold pressure, the lid portion 312A may be bent based on the fold line 318 so that the tip portion of the lid portion 312A may be spaced apart from the main frame 210 of the module case 200, thereby partially opening the vent hole 212 of the module case 200. In this case, the plurality of sub-support portions 316 may support the tip portion of the lid portion 312A.

Next, as shown in FIG. 10, if the pressure of the venting gas generated from the battery cell inside the module case 200 exceeds a second threshold pressure greater than the first threshold pressure, the plurality of sub-support portions 316 supporting the tip portion of the lid portion 312A may be broken so that the remaining portion of the lid portion 312A may also be separated from the main body of the vent hole cover 300A and spaced apart from the module case 200, thereby completely opening the vent hole 212 of the module case 200. In this case, the main support portion 314A may support the entire lid portion 312A.

As described above, the opening portion 310A of the vent hole cover 300A includes, in addition to the main support portion 314A supporting the lid portion 312A, the plurality of sub-support portions 316 that are provided at positions spaced apart from the main support portion 314A to support the lid portion 312A and are configured to break if the pressure of the venting gas exceeds a predetermined threshold pressure, thereby adjusting the open area of the vent hole depending on the pressure of the venting gas.

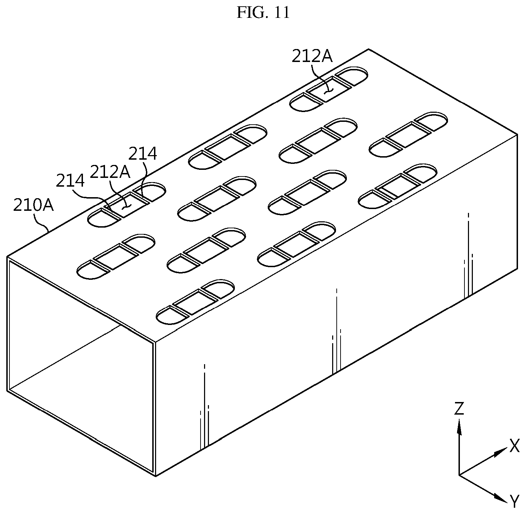

FIG. 11 is a perspective view illustrating a main frame 210A of a module case according to a modified embodiment of the present disclosure.

As shown in FIG. 11, the main frame 210A of the module case according to a modified embodiment, like the main frame 210 shown in FIG. 2, may be configured to have an inner space surrounded by a plurality of surfaces and accommodate at least one battery cell in the inner space. For example, the main frame 210A may be configured in the form of a tube that has an upper surface, a lower surface, a left surface, and a right surface, and has openings formed at the front and rear ends, respectively. In this case, the main frame 210A may be made of a metal material with rigidity and heat resistance.

In addition, at least one vent hole 212A leading to the inner space of the main frame 210A may be provided on the upper surface of the plurality of surfaces constituting the main frame 210A.

In particular, the main frame 210A of the module case may have a blocking beam 214 provided inside the vent hole 212A and configured to block the lid portion 312 or 312A of the vent hole cover 300 or 300A described above from entering the vent hole 212A.

As described above, since the blocking beam 214 is provided inside the vent hole 212A, it is possible to prevent the lid portion 312 or 312A of the vent hole cover 300 or 300A, which opens and closes the opening of the vent hole 212A, broken by external pressure such as the venting gas pressure generated from other battery modules from being pushed into the interior of the vent hole 212A.

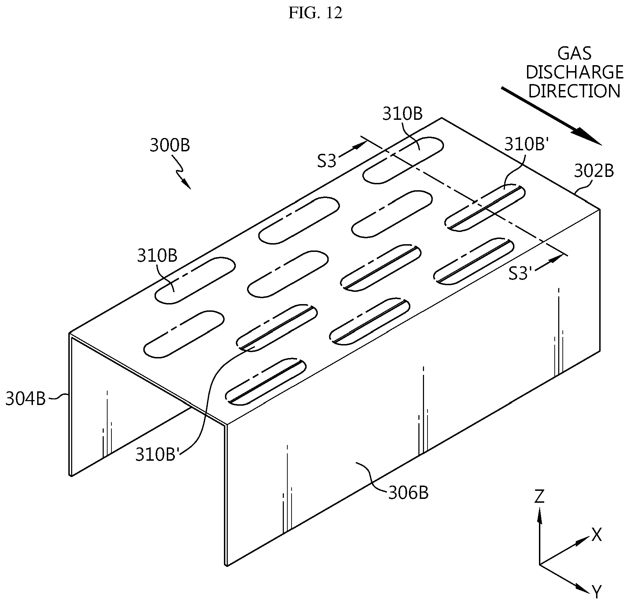

FIG. 12 is a perspective view illustrating a vent hole cover 300B according to another modified embodiment of the present disclosure.

As shown in FIG. 12, in a modified embodiment of the present disclosure, the main frame 210 or 210A of the module case 200 may include a plurality of vent holes arranged in a first direction (Y-axis direction), and the vent hole cover 300B may have a plurality of opening portions 310B and 310B' arranged in the first direction so as to respectively correspond to the plurality of vent holes.

In this case, the plurality of opening portions 310B and 310B' may include different numbers of components corresponding to the sub-support portion 316 of the opening portion 310A shown in FIG. 7. In particular, the plurality of opening portions 310B and 310B' may be configured such that the opening portion includes a larger number of sub-support portions as it is located further in the first direction.

For example, the plurality of opening portions 310A may include a first type of opening portion 310B and a second type of opening portion 310B'. The first type of opening portion 310B, like the opening portion 310 shown in FIG. 4, may include only a support portion configured to not break even if the pressure of the venting gas exceeds a predetermined threshold pressure.

On the other hand, the second type of opening portion 310B', like the opening portion 310A shown in FIG. 7, may include a main support portion configured to not break even if the pressure of the venting gas exceeds the threshold pressure and a plurality of sub-support portions configured to break if the pressure of the venting gas exceeds the threshold pressure.

The first type of opening portion 310B and the second type of opening portion 310B' may be arranged in a predetermined gas discharge direction (e.g., Y-axis direction). In this case, the first type of opening portion 310B without the sub-support portion is located upstream and the second type of opening portion 310B' with the sub-support portions is located downstream of the first type of opening portion 310B along the gas discharge direction.

As described above, since the plurality of opening portions 310B and 310B' is configured such that the opening portion includes a larger number of sub-support portions as it is located further in the gas discharge direction, it is possible to minimize the phenomenon in which the flow of gas discharged from the vent hole located upstream, based on the gas discharge direction, is obstructed by the opening portion of the vent hole located downstream. This is due to the fact that, if the pressure of the venting gas does not exceed the threshold pressure, the opening portion having a larger number of sub-support portions has a smaller area that is opened and erected.

For reference, the gas discharge direction may be determined in relation to the gas discharge path of a battery pack in which the corresponding battery module 10 is accommodated.

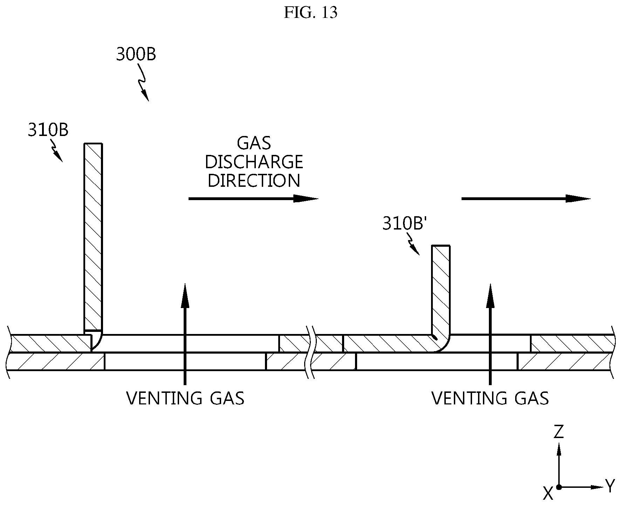

FIG. 13 is a diagram illustrating an opening operation of a cross-sectional portion taken along a line S3-S3' in FIG. 12.

As shown in FIG. 13, if the pressure of venting gas generated from the battery cell accommodated inside the module case 200 is higher than a first threshold pressure at which the first and second types of opening portions 310B and 310B' are opened and less than a second threshold pressure at which the sub-support portion of the second type of opening portion 310B' breaks, the entire opening portion of the first type of opening portion 310B may be opened and erected, but the second type of opening portion 310B' may be partially opened and erected by the sub-support portion.

As a result, the phenomenon in which the flow of gas discharged from the vent hole opened by the first type of opening portion 310B is obstructed by the second type of opening portion 310B' may be minimized.

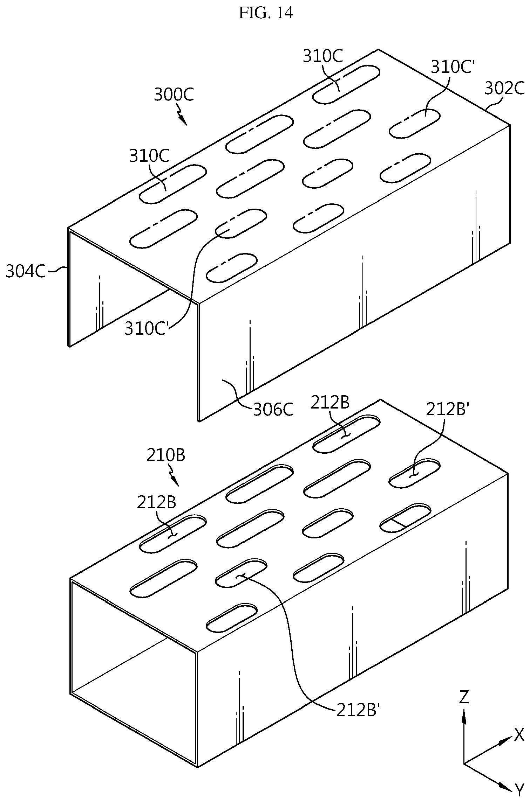

FIG. 14 is a diagram illustrating a main frame 210B of a module case and a vent hole cover 300C according to another modified embodiment of the present disclosure.

As shown in FIG. 14, the main frame 210B of the module case may include a plurality of vent holes 212B and 212B' having openings of different sizes and arranged in a predetermined gas discharge direction (Y-axis direction, the first direction). In this case, the plurality of vent holes 212B and 212B' may be configured such that the vent hole has a smaller opening as it is located further in the first direction.

For example, the plurality of vent holes 212B and 212B' may include a vent hole 212B with a larger opening and a vent hole 212B' with a smaller opening. In addition, the venting hole 212B with a larger opening may be located upstream and the venting hole 212B' with a smaller opening may be located downstream of the venting hole 212B in the gas discharge direction.

Meanwhile, the vent hole cover 300C may include a plurality of opening portions 310C and 310C' having lid portions of different sizes from each other corresponding to the plurality of vent holes 212B and 212B'. In this case, the plurality of opening portions 310C and 310C' may be configured such that the opening portion has a lid portion of a smaller size as it is located further in the gas discharge direction.

As described above, since the plurality of vent holes 212B and 212B' of the main frame 210B and the plurality of opening portions 310B and 310B' of the vent hole cover 300C are configured to be smaller as they are located further in the gas discharge direction, it is possible to minimize the phenomenon in which the flow of gas discharged from the vent hole located upstream, based on the gas discharge direction, is obstructed by the opening portion of the vent hole located downstream.

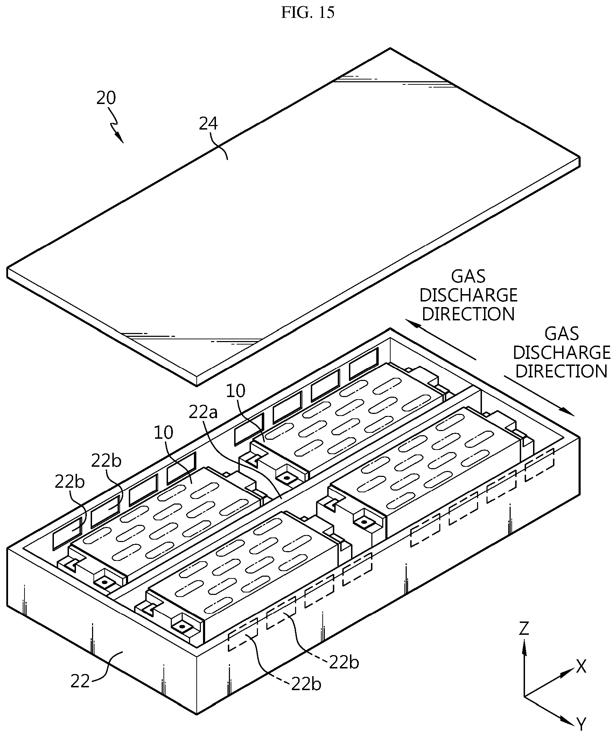

FIG. 15 is a diagram illustrating a battery pack 20 according to an embodiment of the present disclosure.

As shown in FIG. 15, a battery pack 20 according to an embodiment of the present disclosure may include the battery module 10 according to the various embodiments described above. In addition, the battery pack 20 may further include a pack case 22 and 24 accommodating one or more battery modules 10.

The pack case 22 and 24 may include a pack tray 22 that has an accommodation space for accommodating a plurality of battery modules and a pack lid 24 that covers the top opening of the pack tray 22.

The pack tray 22 may include a cross beam 22a that divides the accommodation space. In addition, a gas channel 22b for discharging venting gas generated from each battery assembly may be provided on the wall of the pack tray 22 forming the accommodation space. For example, the gas channel 22b may be provided such that the venting gas of the battery module located on the left side of the cross beam 22a is discharged in the left direction and such that the venting gas of the battery module located on the right side thereof is discharged in the right direction.

In addition, the battery pack 20 may further include a variety of electrical equipment (not shown) that controls the charging and discharging operation of the battery module 10 accommodated in the pack case 22 and 24 or the battery cell included in the battery module 10, or monitors SOC (state-of-charge), SOH (state-of-health), and the like. The electrical equipment may be accommodated in the pack case 22 and 24 together with the battery module 10.

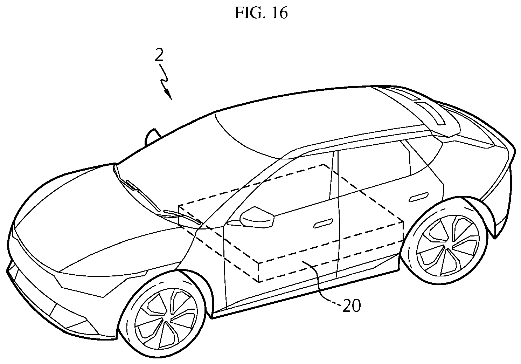

FIG. 16 is a diagram illustrating a vehicle 2 according to an embodiment of the present disclosure.

As shown in FIG. 16, a vehicle 2 according to an embodiment of the present disclosure may include the battery module 10 according to the various embodiments described above. For example, the vehicle 2 may include a battery pack 20 containing one or more battery modules 10. In this case, the battery module 10 or the battery pack 20 including the same may provide electrical energy required for various operations of the vehicle 2.

For reference, the battery module 10 according to the present disclosure may be applied to various electric devices or electric systems in addition to vehicles, and may also be applied to ESSs (Energy Storage Systems).

As described above, according to the present disclosure, since the module case of the battery module accommodating battery cells has a vent hole for discharging venting gas of the battery cells, and since a vent hole cover attached to the module case to cover the vent hole includes an opening portion configured to be opened by the venting gas, it is possible to prevent foreign substances from entering the battery module and quickly discharge venting gas generated from the battery cells to the outside of the battery module. As a result, the heat propagation time can be delayed by minimizing the heat energy accumulated inside the battery module, and chain thermal runaway or ignition of other battery cells accommodated in the battery module can be prevented.

In addition, the vent holes of the battery module are provided only on a specific surface among a plurality of surfaces of the module case, thereby discharging high-temperature and high-pressure venting gas generated from the battery cells in an intended direction, and as a result, it is possible to prevent damage to other battery modules adjacent to the battery module or chain thermal runaway thereof.

In addition, the vent hole cover is configured in the form of a flexible sheet and attached to the module case while covering least two of a plurality of surfaces of the module case, thereby reducing the weight of the battery module, simplifying the manufacturing process, and preventing the vent hole cover from being separated from the module case by the pressure of the venting gas.

In addition, the opening portion of the vent hole cover includes, in addition to the main support portion supporting the lid portion, a plurality of sub-support portions that are provided at positions spaced apart from the main support portion to support the lid portion and are configured to break if the pressure of venting gas exceeds a predetermined threshold pressure, thereby adjusting the open area of the vent hole depending on the pressure of venting gas.

In addition, since a blocking beam is provided inside the vent hole, it is possible to prevent the lid portion of the opening portion, which opens and closes the opening of the vent hole, from being broken by external pressure and being pushed into the interior of the vent hole.

## Claims

1. A battery module (10) comprising:
a module case (200) having an inner space surrounded by a plurality of surfaces to accommodate battery cells (100) in the inner space and at least one vent hole (212) provided on a first surface of the plurality of surfaces so as to lead to the inner space; and
a vent hole cover (300) attached to the module case (200) and configured to cover the at least one vent hole (212),
wherein the vent hole cover (300) comprises an opening portion (310) provided in a portion of the vent hole cover (300) corresponding to the at least one vent hole (212) and configured to be opened by venting gas from the battery cells (100),
wherein the opening portion (310) comprises:
a lid portion (312) configured to be in close contact with the module case (200) to close an opening of a corresponding vent hole (212) and to be separated from the module case (200) when the venting gas is generated to open the opening; and
at least one support portion (314) having one end connected with a portion of the vent hole cover (300), excluding the lid portion (312), and the other end connected with the lid portion (312) so as to support the lid portion (312) separated from the module case (200),
**characterized in that** the module case (200) comprises a blocking beam (214) provided inside the corresponding vent hole (212) and configured to block the lid portion (312) from entering the interior of the corresponding vent hole (212).

2. The battery module (10) according to claim 1,
wherein the vent hole cover (300) is configured in the form of a sheet and attached to the module case (200) so as to cover at least two of the plurality of surfaces.

3. The battery module (10) according to claim 2,
wherein the vent hole cover (300) is made of a flexible material.

4. The battery module (10) according to claim 3,
wherein the flexible material comprises one or more of polyimide, aromatic polyamide, and fluoropolymer.

5. The battery module (10) according to claim 1,
wherein the vent hole cover (300) comprises an attachment surface having an adhesive layer provided thereon and is configured to be attached to a outer surface of the module case (200) using the attachment surface.

6. The battery module (10) according to claim 1,
wherein the vent hole cover (300) comprises:
a cover portion (302) comprising the opening portion (310) and configured to cover the first surface;
a first attachment portion (304) extending from one end of the cover portion (302) and attached to a second surface adjacent to the first surface among the plurality of surfaces; and
a second attachment portion (306) extending from the other end of the cover portion (302) and attached to a third surface adjacent to the first surface among the plurality of surfaces.

7. The battery module (10) according to claim 1,
wherein the at least one support portion (314) comprises:
a main support portion (314A) configured to support the lid portion (312); and
a plurality of sub-support portions (316) provided at positions spaced apart from the main support portion (314A) to support the lid portion (312) and configured to break if the pressure of the venting gas exceeds a predetermined threshold pressure.

8. The battery module (10) according to claim 7,
wherein the at least one vent hole (212) comprises a plurality of vent holes (212) arranged in a first direction,
wherein the vent hole cover (300) comprises a plurality of opening portions (310) respectively corresponding to the plurality of vent holes (212) and comprising different numbers of sub-support portions (316) from each other, and
wherein the plurality of opening portions (310) is configured such that the opening portion (310) comprises a larger number of sub-support portions (316) as it is located further in the first direction.

9. The battery module (10) according to claim 1,
wherein the at least one vent hole (212) comprises a plurality of vent holes (212) having openings of different sizes and arranged in a first direction, and
wherein the plurality of vent holes (212) is configured such that the vent hole (212) has a smaller opening as it is located further in the first direction.

10. The battery module (10) according to claim 9,
wherein the vent hole cover (300) comprises a plurality of opening portions (310) having lid portions (312) of different sizes corresponding to the plurality of vent holes (212), respectively, and
wherein the plurality of opening portions (310) is configured such that the opening portion (310) has a lid portion (312) of a smaller size as it is located further in the first direction.

11. A battery pack (20) comprising the battery module (10) according to any one of claims 1 to 10.

12. A vehicle (2) comprising the battery module (10) according to any one of claims 1 to 10.

## Patentansprüche

1. Batteriemodul (10), umfassend:
ein Modulgehäuse (200), das einen von einer Vielzahl von Oberflächen umgebenen Innenraum zur Aufnahme von Batteriezellen (100) im Innenraum und mindestens ein Entlüftungsloch (212) aufweist, das an einer ersten Oberfläche der Vielzahl von Oberflächen vorgesehen ist, um zum Innenraum zu führen; und
eine Entlüftungslochabdeckung (300), die am Modulgehäuse (200) angebracht und so konfiguriert ist, dass sie das mindestens eine Entlüftungsloch (212) abdeckt,
wobei die Entlüftungslochabdeckung (300) einen Ö/nungsabschnitt (310) umfasst, der in einem Abschnitt der Entlüftungslochabdeckung (300) vorgesehen ist, der dem mindestens einen Entlüftungsloch (212) entspricht, und so konfiguriert ist, dass er durch Entlüftungsgas aus den Batteriezellen (100) geö/net wird,
wobei der Ö/nungsabschnitt (310) umfasst:
einen Deckelabschnitt (312), der so konfiguriert ist, dass er in engem Kontakt mit dem Modulgehäuse (200) steht, um eine Ö/nung eines entsprechenden Entlüftungslochs (212) zu schließen, und vom Modulgehäuse (200) getrennt wird, wenn das Entlüftungsgas erzeugt wird, um die Ö/nung zu ö/nen; und
mindestens einen Stützabschnitt (314), dessen eines Ende mit einem Abschnitt der Entlüftungslochabdeckung (300) unter Ausschluss des Deckelabschnitts (312) verbunden ist und dessen anderes Ende mit dem Deckelabschnitt (312) verbunden ist, um den vom Modulgehäuse (200) getrennten Deckelabschnitt (312) zu stützen,
**dadurch gekennzeichnet, dass** das Modulgehäuse (200) einen Sperrbalken (214) umfasst, der innerhalb des entsprechenden Entlüftungslochs (212) vorgesehen und so konfiguriert ist, dass er verhindert, dass der Deckelabschnitt (312) in das Innere des entsprechenden Entlüftungslochs (212) eindringt.

2. Batteriemodul (10) nach Anspruch 1, wobei die Entlüftungslochabdeckung (300) in Form einer Folie konfiguriert und am Modulgehäuse (200) so angebracht ist, dass sie mindestens zwei der Vielzahl von Oberflächen abdeckt.

3. Batteriemodul (10) nach Anspruch 2, wobei die Entlüftungslochabdeckung (300) aus einem flexiblen Material hergestellt ist.

4. Batteriemodul (10) nach Anspruch 3, wobei das flexible Material eines oder mehrere von Polyimid, aromatischem Polyamid und Fluorpolymer umfasst.

5. Batteriemodul (10) nach Anspruch 1, wobei die Entlüftungslochabdeckung (300) eine Befestigungsfläche umfasst, die eine darauf vorgesehene Klebeschicht aufweist, die so konfiguriert ist, dass sie unter Verwendung der Befestigungsfläche an einer Außenfläche des Modulgehäuses (200) befestigt wird.

6. Batteriemodul (10) nach Anspruch 1, wobei die Entlüftungslochabdeckung (300) umfasst:
einen Abdeckabschnitt (302), der den Ö/nungsabschnitt (310) umfasst und so konfiguriert ist, dass er die erste Oberfläche abdeckt;
einen ersten Befestigungsabschnitt (304), der sich von einem Ende des Abdeckabschnitts (302) erstreckt und an einer zweiten Oberfläche angrenzend an die erste Oberfläche aus der Vielzahl von Oberflächen befestigt ist; und
einen zweiten Befestigungsabschnitt (306), der sich vom anderen Ende des Abdeckabschnitts (302) erstreckt und an einer dritten Oberfläche angrenzend an die erste Oberfläche aus der Vielzahl von Oberflächen befestigt ist.

7. Batteriemodul (10) nach Anspruch 1, wobei der mindestens eine Stützabschnitt (314) umfasst:
einen Hauptstützabschnitt (314A), der so konfiguriert ist, dass er den Deckelabschnitt (312) stützt; und
eine Vielzahl von Hilfsstützabschnitten (316), die an Positionen beabstandet vom Hauptstützabschnitt (314A) vorgesehen sind, um den Deckelabschnitt (312) zu stützen, und so konfiguriert sind, dass sie brechen, wenn der Druck des Entlüftungsgases einen vorbestimmten Schwellendruck überschreitet.

8. Batteriemodul (10) nach Anspruch 7, wobei das mindestens eine Entlüftungsloch (212) eine Vielzahl von Entlüftungslöchern (212) umfasst, die in einer ersten Richtung angeordnet sind,
wobei die Entlüftungslochabdeckung (300) eine Vielzahl von Ö/nungsabschnitten (310) umfasst, die jeweils der Vielzahl von Entlüftungslöchern (212) entsprechen und unterschiedliche Anzahlen von Hilfsstützabschnitten (316) voneinander aufweisen, und
wobei die Vielzahl von Ö/nungsabschnitten (310) so konfiguriert ist, dass der Ö/nungsabschnitt (310) eine größere Anzahl von Hilfsstützabschnitten (316) umfasst, je weiter er in der ersten Richtung angeordnet ist.

9. Batteriemodul (10) nach Anspruch 1, wobei das mindestens eine Entlüftungsloch (212) eine Vielzahl von Entlüftungslöchern (212) mit Ö/nungen unterschiedlicher Größe umfasst, die in einer ersten Richtung angeordnet sind, und
wobei die Vielzahl von Entlüftungslöchern (212) so konfiguriert ist, dass das Entlüftungsloch (212) eine kleinere Ö/nung hat, je weiter es in der ersten Richtung angeordnet ist.

10. Batteriemodul (10) nach Anspruch 9, wobei die Entlüftungslochabdeckung (300) eine Vielzahl von Ö/nungsabschnitten (310) mit Deckelabschnitten (312) unterschiedlicher Größe umfasst, die jeweils der Vielzahl von Entlüftungslöchern (212) entsprechen, und
wobei die Vielzahl von Ö/nungsabschnitten (310) so konfiguriert ist, dass der Ö/nungsabschnitt (310) einen Deckelabschnitt (312) mit einer kleineren Größe hat, je weiter er in der ersten Richtung angeordnet ist.

11. Batteriepack (20), umfassend das Batteriemodul (10) nach einem der Ansprüche 1 bis 10.

12. Fahrzeug (2), umfassend das Batteriemodul (10) nach einem der Ansprüche 1 bis 10.

## Revendications

1. Module de batterie (10) comprenant :
un boîtier de module (200) ayant un espace intérieur entouré par une pluralité de surfaces pour recevoir des cellules de batterie (100) dans l'espace intérieur et au moins un trou d'évent (212) prévu sur une première surface de la pluralité de surfaces de manière à conduire à l'espace intérieur ; et
un couvercle de trou d'évent (300) fixé au boîtier de module (200) et configuré pour couvrir l'au moins un trou d'évent (212),
dans lequel le couvercle de trou d'évent (300) comprend une partie d'ouverture (310) prévue dans une partie du couvercle de trou d'évent (300) correspondant à l'au moins un trou d'évent (212) et configurée pour être ouverte par un gaz de décharge provenant des cellules de batterie (100),
dans lequel la partie d'ouverture (310) comprend :
une partie de couvercle (312) configurée pour être en contact étroit avec le boîtier de module (200) pour fermer une ouverture d'un trou d'évent correspondant (212) et pour être séparée du boîtier de module (200) lorsque le gaz de décharge est généré pour ouvrir l'ouverture ; et
au moins une partie de support (314) ayant une extrémité reliée à une partie du couvercle de trou d'évent (300), à l'exclusion de la partie de couvercle (312), et l'autre extrémité reliée à la partie de couvercle (312) de manière à supporter la partie de couvercle (312) séparée du boîtier de module (200),
**caractérisé en ce que** le boîtier de module (200) comprend une poutre de blocage (214) prévue à l'intérieur du trou d'évent correspondant (212) et configurée pour empêcher la partie de couvercle (312) de pénétrer à l'intérieur du trou d'évent correspondant (212).

2. Module de batterie (10) selon la revendication 1, dans lequel le couvercle de trou d'évent (300) est configuré sous la forme d'une feuille et fixé au boîtier de module (200) de manière à couvrir au moins deux de la pluralité de surfaces.

3. Module de batterie (10) selon la revendication 2, dans lequel le couvercle de trou d'évent (300) est fait d'un matériau flexible.

4. Module de batterie (10) selon la revendication 3, dans lequel le matériau flexible comprend un ou plusieurs parmi un polyimide, un polyamide aromatique et un fluoropolymère.

5. Module de batterie (10) selon la revendication 1, dans lequel le couvercle de trou d'évent (300) comprend une surface de fixation sur laquelle est prévue une couche adhésive et est configuré pour être fixé à une surface extérieure du boîtier de module (200) en utilisant la surface de fixation.

6. Module de batterie (10) selon la revendication 1, dans lequel le couvercle de trou d'évent (300) comprend :
une partie de couverture (302) comprenant la partie d'ouverture (310) et configurée pour couvrir la première surface ;
une première partie de fixation (304) s'étendant à partir d'une extrémité de la partie de couverture (302) et fixée à une deuxième surface adjacente à la première surface parmi la pluralité de surfaces ; et
une deuxième partie de fixation (306) s'étendant à partir de l'autre extrémité de la partie de couverture (302) et fixée à une troisième surface adjacente à la première surface parmi la pluralité de surfaces.

7. Module de batterie (10) selon la revendication 1, dans lequel l'au moins une partie de support (314) comprend :
une partie de support principale (314A) configurée pour supporter la partie de couvercle (312) ; et
une pluralité de parties de sous-support (316) prévues à des positions espacées de la partie de support principale (314A) pour supporter la partie de couvercle (312) et configurées pour se rompre si la pression du gaz de décharge dépasse une pression de seuil prédéterminée.

8. Module de batterie (10) selon la revendication 7, dans lequel l'au moins un trou d'évent (212) comprend une pluralité de trous d'évent (212) agencés dans une première direction,
dans lequel le couvercle de trou d'évent (300) comprend une pluralité de parties d'ouverture (310) correspondant respectivement à la pluralité de trous d'évent (212) et comprenant des nombres différents de parties de sous-support (316) les unes des autres, et
dans lequel la pluralité de parties d'ouverture (310) est configurée de telle sorte que la partie d'ouverture (310) comprend un plus grand nombre de parties de sous-support (316) à mesure qu'elle est située plus loin dans la première direction.

9. Module de batterie (10) selon la revendication 1, dans lequel l'au moins un trou d'évent (212) comprend une pluralité de trous d'évent (212) ayant des ouvertures de tailles différentes et agencés dans une première direction, et
dans lequel la pluralité de trous d'évent (212) est configurée de telle sorte que le trou d'évent (212) a une ouverture plus petite à mesure qu'il est situé plus loin dans la première direction.

10. Module de batterie (10) selon la revendication 9, dans lequel le couvercle de trou d'évent (300) comprend une pluralité de parties d'ouverture (310) ayant des parties de couvercle (312) de différentes tailles correspondant à la pluralité de trous d'évent (212), respectivement, et
dans lequel la pluralité de parties d'ouverture (310) est configurée de telle sorte que la partie d'ouverture (310) a une partie de couvercle (312) de plus petite taille à mesure qu'elle est située plus loin dans la première direction.

11. Bloc-batterie (20) comprenant le module de batterie (10) selon l'une quelconque des revendications 1 à 10.

12. Véhicule (2) comprenant le module de batterie (10) selon l'une quelconque des revendications 1 à 10.
